# EUROPEAN PATENT APPLICATION

(11) **EP 4 701 248 A1**
(43) Date of publication of application: **25.02.2026**
(21) Application number: 25193653.0
(22) Date of filing: 04.08.2025
(51) Int. Cl.: H04W 8/22, H04L 65/1016, H04L 65/1073, H04M 3/493, H04W 8/24, H04W 60/00

(54) **SYSTEM AND METHOD FOR DETERMINING A VOICE COMMUNICATION CAPABILITY OF A WIRELESS COMMUNICATION DEVICE**

(30) Priority: 23.08.2024 EP 24196174
(71) Applicant: Koninklijke KPN N.V., 3072 AP Rotterdam (NL)
(72) Inventor: ROEST, Alexander Johannes, 3072 AP Rotterdam (NL); SMEETS, Bob, 3072 AP Rotterdam (NL)
(74) Representative: De Vries & Metman

(57) **Abstract**

The disclosure pertains to a system for determining at least one voice communication capability of at least one wireless communication device configured to register in and connect to a core network through at least one radio access network using at least one radio access technology. The system may comprise a signalling information evaluation system configured to determine at least one of first signalling information and second signalling information for the wireless communication device depending on radio access technology used by the wireless communication device when registering or establishing a voice connection in the core network through the radio access network. The system may further comprise or have access to at least one database comprising the at least one voice communication capability associated with at least one of the first signalling information and the second signalling information. The system may be configured to determine the at least one voice communication capability from the at least one database based on at least one of the determined first signalling information and second signalling information. From the signalling information obtained for the wireless communication device upon registering and connecting through a radio access network, the database can be queried to obtain access to the voice communication capability to be determined.

## Description

### TECHNICAL FIELD

The present disclosure relates to a system and method for determining at least one voice communication capability of a wireless communication device. More particularly, the disclosure relates to a system and method for determining at least one voice communication capability of at least one wireless communication device configured to register in and connect to a core network through at least one radio access network using at least one radio access technology.

### BACKGROUND

Telecommunication operators have offered wireless communication services over the past decades through a number of generations of public land mobile networks, PLMNs, wherein each network generation added further services for the customers of the telecommunication operators.

In general, first (1G) and second (2G) generation networks mainly offered wireless access for circuit-switched voice communications. The 2G generation of networks is often referred to as the Global System for Mobile, GSM, communications in Europe and made wireless voice services available for the first time to the public at large. The GSM activities were standardized by the European Telecommunication Standards Institute, ETSI, newly formed in 1989. With the second-generation digital mobile communications came also the opportunity to provide data services over the wireless communication networks. These data services introduced in 2G were text messaging (SMS) and circuit-switched data services enabling internet access and other data applications. Packet-switched data over cellular systems emerged with the General Packet Radio Services, GPRS, sometimes referred to as 2.5G.

A further focus on wireless data transmission started off with the third-generation networks (3G), also referred to as UMTS in Europe, in the first decade of the new millennium. 3G telecommunications standardization activities were executed by the 3G Partnership Project, 3GPP, which is a partnership of international standardization bodies, such as ETSI.

In the past decade, integrated Internet Protocol, IP, based wireless communications systems, generally referred to as 4G and, more recently, 5G came into existence to enable large-scale data communications, such as for Internet-of-Things services and were introduced in consumer markets worldwide. The fourth-generation, 4G, systems are also known as Long Term Evolution, LTE, systems. Both the 4G and 5G communication systems were standardized within 3GPP. In the last few years, the first steps were taken for standardization of 6G communication systems within 3GPP.

The operation and maintenance of different generations of telecommunication networks is a cumbersome and costly task for telecommunication operators. On the other hand, ever more parties rely on the operation of such networks and telecommunication operators have a responsibility towards these parties to continue providing services. Whereas wireless communication devices are generally configured to communicate over a variety of generations of telecommunication networks, discontinuation or phasing-out of a network generation may affect the use of wireless communication devices of one or more services provided by a telecommunications operator, or of a telecommunication network in its entirety, and should therefore be executed with a high level of care.

### SUMMARY

The inventors have considered that several reasons may exist for wireless communication devices to experience difficulties when a network generation is discontinued and customers should be enabled to use another network generation, in particular a network of a newer generations, herein also referred to as a new generation network. Such difficulties may relate to problems in enjoying certain services, such as voice services, from the new generation network.

The wireless communication device may, for example, not be able to register in and/or connect to the new generation network because of its hardware configuration. For example, a mobile phone once acquired for voice services in a GSM network may not be able, because of its hardware, to enjoy high-rate data services in an LTE network.

When a wireless communication device has suitable hardware for the new generation network, it may require suitable software to make use of certain services of the new generation network. Without suitable software, the device may still experience difficulties in enjoying services from the new generation network, such as voice services. For example, with the advent of the 4G network generation, wireless communication devices (especially "smartphones") were provided with a software stack similar to network connected fixed computer systems - under active software control by the device manufacturer. While this development greatly enhanced the functionality and ongoing quality improvements of the wireless communication devices, device manufacturers were required to roll-out software updates that customers were also expected to install. In addition, customers were given control over a variety of settings in the wireless communication device to tailor the behavior of the device. Devices for 2G- and 3G networks generally did not contain such software packages and setting options, or only to a limited extent.

The software running on a wireless communication device may cause problems, however, when a network generation is phased-out and the wireless communication device should be using the new generation network, if possible. Several causes of problems have been identified by the inventors. One cause may be that different wireless communication devices may have different software versions offering access to a particular service. For example, a 4G-capable device from one manufacturer may be provided with regular software updates enabling the device to enjoy a voice service of a 4G network, commonly referred to as Voice-over-LTE, VoLTE. At the same time, another 4G-capable device may not be supported anymore by its manufacturer and contain out-of-date software and may therefore not be able to enjoy the VoLTE service, despite being 4G-capable. Likewise, a customer may have failed to install a new software version offered by the manufacturer causing similar problems when the device should be transferred to another network generation for VoLTE services, for example. Furthermore, a customer may have, possibly unintentionally or unaware of the consequences, changed the settings of the wireless communication device and locked the device to the network generation to be discontinued. This may cause problems in the transfer to the new generation network, even when the wireless communication device is hardware-ready for the new generation network.

Still further, some telecommunication operators have introduced services stepwise and manufacturers provided software updates in steps as well to enable the devices to enjoy the introduced services in the network of the operator. For example, some telecommunications operators allowed voice calls to certain call entities over a newer-generation network later than voice calls to other entities. This may be due to particular requirements to be met for the certain call entities. One specific example is that a telecommunication operator may only have allowed VoLTE calls to an emergency call entity (for example, 911) over a 4G network at a later time than VoLTE calls to other call entities. As a result of, for example, the software update issues discussed in the previous paragraphs, a wireless communication device may be capable of enjoying VoLTE services from a network operator in general, but not be able to place an emergency service call using VoLTE, which inability obviously is highly undesirable.

From the above, it is apparent that determination of the hardware-capabilities of a wireless communication device may not be sufficient to determine whether a wireless communication device is suitable to communicate over a newer generation network, and it may not even be possible for a customer to determine the hardware capabilities. Hence, there is a need for a more advanced determination system that can inform the operator and/or the customer of the capabilities of the wireless communication device to evaluate whether a device is suitable to be transferred to the new generation network or should be replaced.

One aspect of the disclosure pertains to a system for determining at least one voice communication capability of at least one wireless communication device configured to register in and connect to a core network through at least one radio access network using at least one radio access technology.

The system may comprise a signalling information evaluation system configured to determine at least one of first signalling information and second signalling information for the wireless communication device depending on radio access technology used by the wireless communication device when registering or establishing a voice connection in the core network through the radio access network.

The system may further comprise or have access to at least one database comprising the at least one voice communication capability associated with at least one of the first signalling information and the second signalling information. The system may be configured to determine the at least one voice communication capability from the at least one database based on at least one of the determined first signalling information and second signalling information.

From the signalling information obtained for the wireless communication device upon registering and connecting through a radio access network, the database can be queried to obtain access to the voice communication capability to be determined.

The determination process may be initiated by the customer himself/herself simply switching on the wireless communications device and triggering a voice call request from the device. It should be appreciated that the wireless communication device attempts to register and connect for the service for which its capabilities are to be determined.

It should be appreciated that the wireless communication device registration procedure may comprise a network attach procedure, and the registration and connect procedures are configured in accordance with the specific network generation specifications.

Although some voice capability evaluation can already be detected by determining the radio access technology used for the voice communication, a deeper evaluation provides an improved voice communication capability evaluation by using signalling information for the wireless communication device, particularly if the device's capability to consume voice services is to be evaluated. The signalling information may reveal further information on the software and/or settings of the device and may be delivered depending on the radio access network via which the device registers and connects. For example, when the wireless communication device registers via the first radio access network, first signalling information may be used to determine its voice communication capabilities and when the wireless communication device connects via the second radio access network, second signalling information (different from the first signalling information), may be received and evaluated (possibly in addition to the first signalling information also available for this device).

One further aspect of the disclosure involves a method for determining at least one voice communication capability of at least one wireless communication device configured to register in and connect to a core network through at least one radio access network using at least one radio access technology. The method may comprise one or more of the following two steps. One step may involve determining at least one of first signalling information and second signalling information for the wireless communication device depending on the radio access technology used by the wireless communication device when registering or establishing a voice connection in the core network through the radio access network. Another step may involve determining the at least one voice communication capability from at least one database, the database comprising the at least one voice communication capability associated with at least one of the first signalling information and the second signalling information, based on at least one of the determined first signalling information and second signalling information.

The method may further involve the step of populating the at least one database with voice communication capability information in association with signalling information. The signalling information may include at least one of a device identifier and software version (or derivative thereof).

In one embodiment, the system may comprise a radio access technology determination system configured to determine a first radio access technology or a second radio access technology as the radio access technology used by the at least one wireless communication device when registering or establishing a voice connection in the core network through the radio access network.

In such a case, the signalling information evaluation system may be configured to determine at least one of first signalling information and second signalling information for the wireless communication device depending on whether the first radio access technology or the second radio access technology is used when registering or establishing the voice connection in the core network through the radio access network.

The radio access technology determination system may serve as a preliminary filter in the system to distinguish between hardware equipment of the wireless communication devices when registering or connecting via a particular radio access technology. Under the assumption that the network using the first radio access technology is the network of the generation to be discontinued and the network using the second radio access technology is the network of the newer generation for which the suitability of the wireless communication device is to be determined, when the device registers and connects using the second radio access technology, it may be concluded that its hardware equipment is suited for the newer generation network. However, if the wireless communication device is registering and connecting using the first radio access technology, it may still be hardware-capable to register and connect via the second radio access network but, for example, have its setting such that the device is forced to connect via the first radio access network or the device may run out-of-date software. Also, if the wireless communication device connects via the second radio access network and therefore has suitable hardware equipment, it may still experience problems in connecting to some call entities as explained above.

From the radio access technology and signalling information obtained for the wireless communication device upon registering and connecting through a radio access network, the database can be queried to obtain access to the voice communication capability to be determined.

In one embodiment, the to be discontinued radio access technology comprises ETSI Global System for Mobile communications, GSM, radio access technology (2G) and/or General Packet Radio Service, GPRS (also referred to as the first radio access technology in this disclosure) and the radio access technology of the new generation network comprises 3GPP Long Term Evolution, LTE, radio access technology (4G) or higher (also referred to as the second radio access technology in this disclosure). Whereas many telecommunication operators have previously discontinued operation of their 3G network (while maintaining operation of the 2G/2.5G network), discontinuation of 2G/2.5G has been identified by the inventors as more problematic in view of the software issues discussed herein when transferring devices to a 4G or 5G network.

In one embodiment, the signalling information evaluation system comprises at least one of a device identifier determination system and a software version determination system.

The device identifier determination system may be configured to determine a device identifier used by the wireless communication device as first signalling information when registering or connecting through the radio access network at least when a first radio access technology is used by the wireless communication device. The device identifier may be the International Mobile Equipment Identity, IMEI, number or a part thereof, such as the Type Approval Code, TAC. Most generations of telecommunications networks store these identifiers, for example in the Equipment Identity Register, EIR, and this identifier can be determined when the wireless communication device registers and/or connects through the radio access network. The database may store the voice communication capability for a plurality of IMEI numbers or TAC numbers so that the system may determine the voice communication capability of the wireless communication device from or via the IMEI or TAC number. IN addition, or alternatively, the MSISDN may be used. For a wireless communication device configured for 2G only, such an identifier may be the only signalling information that can be evaluated and used for the voice communication capability determination.

For other generation devices, further signalling information (such as software version information) may be available, for example through Session Initiation Protocol, SIP, User Agent, UA, , SIP UA, signalling. This information may be sufficient to determine the voice communication capability if the database contains such information.

If such software version information (or a derivative thereof) does not result in a hit in the database, the IMEI/TAC number may still be of assistance to determine the voice communication capability of the wireless communication device from the at least one database. For example, if a Session Initiation Protocol, SIP, User Agent, UA, can be determined, but the SIP UA (or a derivative thereof, such as brand, model and software version) is unknown from the database, the IMEI/TAC number may be helpful to determine the voice communication capability of the wireless communication device.

In one embodiment, a method may be performed comprising at least one of the following steps. One step may involve determining a device identifier used by the wireless communication device as first signalling information when registering or connecting through the radio access network at least when a first radio access technology is used by the wireless communication device. Another step may involve determining a software version used by the wireless communication device as second signalling information when registering or connecting through the radio access network at least when a second radio access technology is used by the wireless communication device. The at least one database comprises at least one voice communication capability associated with at least one of the device identifier and the software version, The method may further involve the step of determining the at least one voice communication capability from the at least one database based on at least one of the device identifier and the software version.

The software version determination system may be configured to determine a software version used by the wireless communication device as second signalling information when registering or connecting through the radio access network at least when a second radio access technology is used by the wireless communication device. One example comprises determination of a software version from the SIP UA mentioned above. Such signalling information may be derived when a 4G-capable wireless communication device registers and connects through a 4G radio access network. The database may store the voice communication capability for a plurality of software versions so that the system may determine the voice communication capability of the wireless communication device from the software version. In such a case, the device identifier may typically also be determined and used for determining the voice communication capability (or used for a cross-check).

In one embodiment, at least one of the first signalling information and second signalling information is associated with the at least one voice communication capability in the at least one database via at least one of a brand indication and model indication of the wireless communication device. It is generally not necessary to store the voice communication capability, such as the voice communication capability, for each wireless communication device individually. For example, it may not be necessary to store VoLTE capabilities for each IMEI number individually, since the voice communication capability may be the same for a TAC number and/or software version run by a plurality of wireless communication devices.

In one embodiment, the at least one voice communication capability may comprise a capability to establish a voice connection using a second radio access technology through the radio access network, such as Voice-over-LTE (VoLTE). In view of the software-centered 4G devices and the associated issues elaborated on in this disclosure, the inventors have identified that VoLTE capabilities are a particularly important capability to be evaluated upon transfer to a new generation network. This is certainly so for wireless communication devices still communicating over 2G networks that are mainly used for voice communications.

In one embodiment, the at least one voice communication capability may comprise a capability to connect to one or more particular telephone numbers, such as one or more emergency telephone numbers, using a second radio access technology through the radio access network. As mentioned above, the capability should be evaluated to ensure that customers can reach emergency services, for example.

In one embodiment, the system may be configured to generate a message for the wireless communication device in response to receiving an indication of a registration message or voice call from the wireless communication device, wherein the contents of the message is based on the determined voice communication capability. The message can be used by the network operator to evaluate the presence and/or capabilities of legacy devices still in the field.

In one embodiment, the system may further be configured to trigger transmission of the message to the wireless communication device. This embodiment informs the customer owning the wireless communication device through the message of the voice communication capability of the device and may be used to provide advice to the customer, for example that the device should be replaced, that a software update is required, that the customer needs to go to the premises of the network operator for further evaluation or advice, etc.

In one embodiment, the system may be configured to be accessible from the wireless communication device through the at least one radio access network by a generic telephone number, such as a telephone number of a voice response system. The embodiment allows for easy access for customers to the system to determine the voice communication capability of their devices.

In one embodiment, the system may provide a first call flow and a second call flow, wherein the first call flow is selected when the first radio access network is determined and the second call flow is selected when the second radio access network is determined. The embodiment allows for efficient processing of incoming calls in the system.

In one embodiment, the system may be configured to connect to a call entity, such as an emergency call entity, and is configured to populate the database with voice communication capabilities based on voice calls to the call entity. The embodiment enables reliably filling of the database for a particular call entity automatically.

Another aspect of the disclosure involves a computer program product comprising one or more software code portions configured to, when run on the system as disclosed herein, to execute one or more steps performed by the system as disclosed herein.

As will be appreciated by one skilled in the art, aspects of the present invention may be embodied as a system, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute entirely on the person's computer, partly on the person's computer, as a stand-alone software package, partly on the person's computer and partly on a remote computer, or entirely on the remote computer or server. In the latter scenario, the remote computer may be connected to the person's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

Moreover, a computer program for carrying out the methods described herein, as well as a non-transitory computer readable storage-medium storing the computer program are provided.

Elements and aspects discussed for or in relation with a particular embodiment may be suitably combined with elements and aspects of other embodiments, unless explicitly stated otherwise. Embodiments of the present invention will be further illustrated with reference to the attached drawings, which schematically will show embodiments according to the invention. It will be understood that the present invention is not in any way restricted to these specific embodiments.

### BRIEF DESCRIPTION OF THE DRAWINGS

Aspects of the invention will be explained in greater detail by reference to exemplary embodiments shown in the drawings, in which:
FIG. 1 is a schematic illustration of a telecommunications network arrangement of a telecommunications operator comprising a system for determining a voice communication capability of a wireless communication device;
FIG. 2 is a schematic illustration of an embodiment of a system for determining a voice communication capability;
FIG. 3 is a flow chart comprising some steps of an embodiment for a method for determining a voice communication capability;
FIG. 4 is a schematic illustration of a more detailed embodiment of the telecommunications network arrangement and system for determining a voice communication capability;
FIGS. 5 and 6 are steps for operation in the system of FIG. 4; and
FIG. 7 is a block diagram of a processing system according to an embodiment of system for determining a voice communication capability or a part thereof.

### DETAILED DESCRIPTION OF THE DRAWINGS

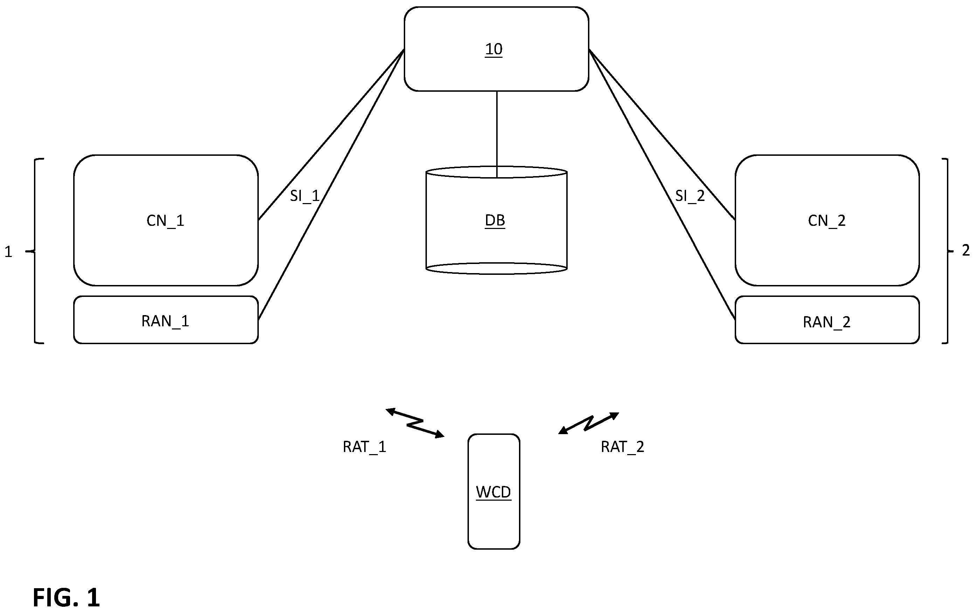

FIG. 1 is a schematic illustration of a telecommunications network arrangement of a telecommunications operator comprising a system 10 for determining a voice communication capability of a wireless communication device WCD. The telecommunications network arrangement comprises at least a first wireless access network 2 and a second wireless access network 3. The first wireless access network 1 may comprise a first radio access network RAN_1 and a first core network CN_1. The second wireless access network 2 may comprise a second radio access network RAN_2 and a second core network CN_2. The first radio access network RAN_1 may use a first radio access technology RAT_1 to provide access for the wireless communication device WCD. The second radio access network RAN_2 may use a second radio access technology RAT_2 to provide access for the wireless communication device WCD. RAT_1 may be GSM, for example and RAT_2 may be LTE, for example. Both core networks CN_1, CN_2 may be connected to further networks, such as data networks or telephone networks, such as an IP multimedia system, IMS, network.

The system 10 for determining a voice communication capability of wireless communication device WCD may be connected to both the first wireless access network 1 and the second wireless access network 2 as shown. The connections allow the system 10 to obtain signalling information exchanged in either one of the wireless access networks 1, 2 when the wireless communication device WCD exchanges signalling information with these wireless access networks 1, 2 for a voice call connection, or otherwise, through these networks. Signalling information exchanged via the first wireless access network 1 is referred to a first signal information SI_1 and signalling information exchanged via the second wireless access network 2 is referred to a second signalling information SI_2. The signalling information SI_1, SI_2 may also be generated within the telecommunications network arrangement based on other information. Signalling information SI_1, SI_2 may be exchanged when the wireless communication device WCD registers in and/or connects to the core networks CN_1, CN_2 respectively.

System 10 includes or has access to a database DB. Database DB comprises at least one voice communication capability associated with at least one of the first signalling information SI_1 and the second signalling information SI_2.

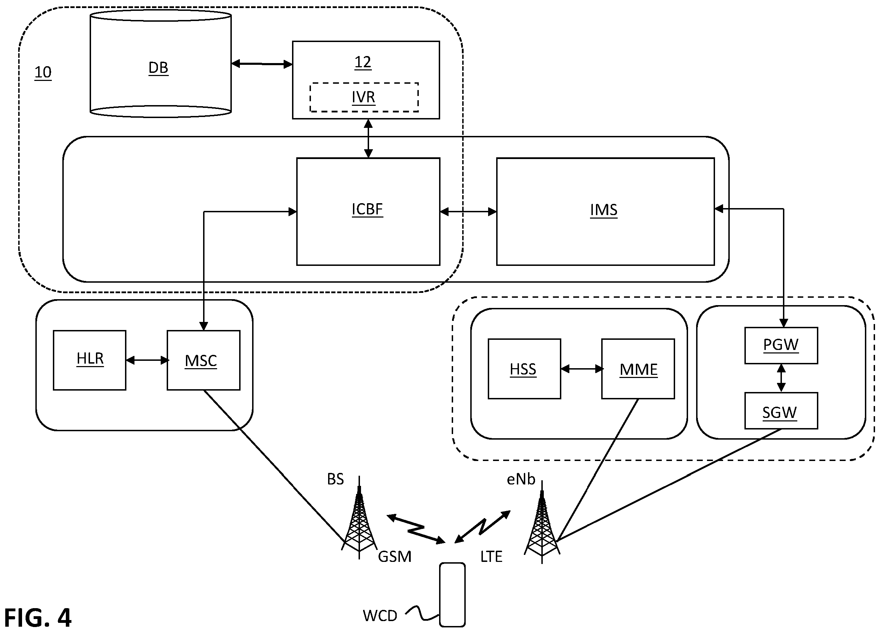

The system 10 for determining a voice communication capability may be integrated, at least in part, in the first wireless access network 1 and/or second wireless access network 2. Alternatively, or in addition, the system 10 may be implemented in or in connection with an IP multimedia system, IMS, as will be further described with reference to FIG. 4. The signalling information SI_1, SI_2 may be obtained from session initiation protocol, SIP, messages exchanged via the IMS.

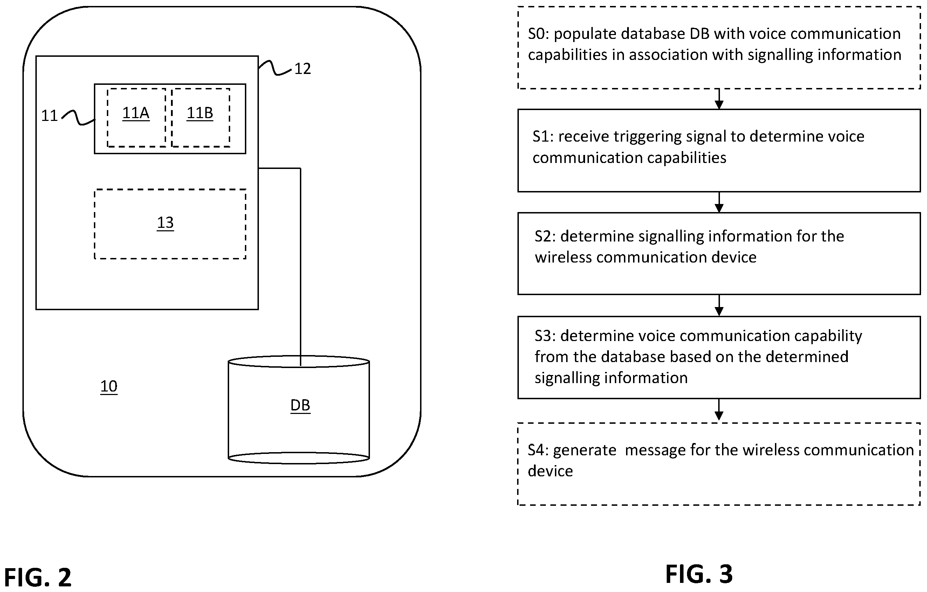

FIG. 2 is a schematic illustration of an embodiment of a system 10 for determining a voice communication capability. The system 10 for determining a voice communication capability includes a signalling information evaluation system 11 configured to determine at least one of first signalling information SI_1 and second signalling information SI_2 for the wireless communication device WCD depending on the radio access technology used by the wireless communication device when registering or establishing a voice connection in the core network CN_1, CN_2 through the radio access network RAN_1, RAN_2, respectively. Signalling information evaluation system 11 may be part of a processing system 12, as shown. The processing system 12 is configured to determine the at least one voice communication capability from the at least one database DB based on at least one of the determined first signalling information SI_1 and second signalling information SI_2. This may be done by querying the database DB storing the voice communication capability using the obtained signalling information is association with the signalling information.

The determination process may be initiated when the wireless communications device WCD issues a registration request and/or voice call request.

The signalling information evaluation system 11 provides for voice communication capability evaluation by using signalling information SI_1, SI2 for the wireless communication device WCD. The signalling information SI_1, SI_2 may reveal further information on the software and/or settings of the wireless communication device WCD and may be delivered depending on the radio access network via which the device registers and connects. For example, when the wireless communication device WCD registers via the first radio access network RAN_1 in FIG. 1, first signalling information SI_1 may be used to determine its voice communication capabilities and when the wireless communication device WCD connects via the second radio access network RAN_2, second signalling information SI_2 (different from the first signalling information SI_1), may be received and evaluated (possibly in addition to the first signalling information also available for this device).

The system 10 for determining a voice communication capability may optionally comprise a radio access technology determination system 13 configured to determine a first radio access technology RAT_1 or a second radio access technology RAT_2 as the radio access technology used by the at least one wireless communication device WCD when registering or establishing a voice connection in the core network CN_1, CN_2 through the radio access network RAN_1, RAN_2, respectively.

In such a case, the signalling information evaluation system 11 may be configured to determine at least one of first signalling information SI_1 and second signalling information SI_2 for the wireless communication device depending on whether the first radio access technology RAT_1 or the second radio access technology RAT_2 is used when registering or establishing the voice connection in the core network through the radio access network RAN_1 or RAN_2.

The radio access technology determination system 13 may serve as a preliminary filter in the system 10 to distinguish between hardware equipment of the wireless communication devices WCD when registering or connecting via a particular radio access technology RAT. Under the assumption that the network using the first radio access technology RAT_1 is the network of the generation to be discontinued and the network using the second radio access technology RAT_2 is the new generation network for which the suitability of the wireless communication device WCD is to be determined, when the device registers and connects using the second radio access technology RAT_2, it may be concluded that its hardware equipment is suited for the newer generation network. However, if the wireless communication device WCD is registering and connecting using the first radio access technology RAT_1, it may still be hardware-capable to register and connect via the second radio access network RAN_2 but, for example, have its setting such that the device WCD is forced to connect via the first radio access network or run out-of-date software. Also, if the wireless communication device WCD connects via the second radio access network RAN_2 and therefore has suitable hardware equipment, it may still experience problems in connecting to some call entities as will be elaborated on in relation to FIG. 4.

From the radio access technology and signalling information obtained for the wireless communication device upon registering and connecting through a radio access network, the database DB can be queried to obtain access to the voice communication capability to be determined.

Optionally, the signalling information evaluation system 11 may comprise a device identifier determination system 11A. The device identifier determination system 11A may be configured to determine a device identifier used by the wireless communication device WCD as first signalling information SI_1 when registering or connecting through the radio access network RAN_1 at least when a first radio access technology RAT_1 is used by the wireless communication device WCD. The device identifier may be the International Mobile Equipment Identity, IMEI, number or a part thereof, such as the Type Approval Code, TAC. Most generations of telecommunications networks store these identifiers, for example in the Equipment Identity Register, EIR, and this identifier can be determined when the wireless communication device WCD registers and/or connects through the radio access network RAN. The database DB may store the voice communication capability for a plurality of IMEI numbers or TAC numbers so that the system 10 may determine the voice communication capability of the wireless communication device WCD from or via the IMEI or TAC number. For a wireless communication device configured for 2G only, such an identifier may be the only signalling information that can be evaluated and used for the voice communication capability determination. For other generation devices, further signalling information (such as software version information) may be available, but if such information (or a derivative thereof) does not result in a hit in the database DB, the IMEI/TAC number may still be of assistance to determine the voice communication capability of the wireless communication device WCD from the at least one database DB. For example, if a Session Initiation Protocol, SIP, User Agent, UA, can be determined, but the SIP UA (or a derivative thereof, such as brand, model and software version) is unknown from the database, the IMEI/TAC number may be helpful to determine the voice communication capability of the wireless communication device.

Optionally, the signalling information evaluation system 11 comprises a software version determination system 11B. The software version determination system 11B may be configured to determine a software version used by the wireless communication device WCD as second signalling information SI_2 when registering or connecting through the radio access network RAN at least when a second radio access technology RAT_2 is used by the wireless communication device WCD. One example comprises determination of a software version from the SIP UA mentioned above. Such signalling information may be derived when a 4G-capable wireless communication device registers and connects through a 4G radio access network. The database DB may store the voice communication capability for a plurality of software versions so that the system 10 may determine the voice communication capability of the wireless communication device WCD from the software version. In such a case, the device identifier may typically also be determined and used for determining the voice communication capability (or used for a cross-check).

FIG. 3 is a flow chart comprising some steps of an embodiment for a method for determining a voice communication capability.

In a step S1, the system 10 for determining a voice communication capability receives a triggering signal to determine the voice communication capability. Such a triggering signal may comprise the receiving of signalling information SI_1 and/or SI_2 resulting from a communication from the wireless communication device WCD, such as a registration and/or establishment of a voice connection. Other ways of triggering the determination of the voice communication capability are also envisaged.

Step S2 comprises determining at least one of first signalling information SI_1 and second signalling information SI_2 for the wireless communication device WCD depending on the radio access technology used by the wireless communication device when registering or establishing a voice connection in the core network through the radio access network. Step S2 may involve determining a device identifier used by the wireless communication device as first signalling information when registering or connecting through the radio access network at least when a first radio access technology is used by the wireless communication device and/or determining a software version used by the wireless communication device as second signalling information when registering or connecting through the radio access network at least when a second radio access technology is used by the wireless communication device.

Step S3 involves determining the at least one voice communication capability from at least one database, the database comprising the at least one voice communication capability associated with at least one of the first signalling information SI_1 and the second signalling information SI_2, based on at least one of the determined first signalling information and second signalling information. The first signalling information SI_1 and second signalling information SI_2 may be associated with the at least one voice communication capability in the database DB via at least one of a brand indication and model indication of the wireless communication device WCD. It is generally not necessary to store the voice communication capability, such as the voice communication capability, for each wireless communication device WCD individually. For example, it may not be necessary to store VoLTE capabilities for each IMEI number individually, since the voice communication capability may be the same for a TAC number and/or software version run by a plurality of wireless communication devices.

The voice communication capability may comprise a capability to establish a voice connection using a second radio access technology RAT_2 through the radio access network, such as Voice-over-LTE (VoLTE) for the wireless communication device WCD.

Optionally, the method also includes a preliminary step S0. Step S0 involves the step of populating the at least one database DB with voice communication capability information in association with signalling information. The signalling information may include at least one of a device identifier and software version (or derivative thereof).

Optionally, the method also includes a further step S4 of generating a message for the wireless communication device WCD in response to receiving an indication of a registration message or voice call from the wireless communication device, wherein the contents of the message is based on the determined voice communication capability. The message may be transmitted to the wireless communication device WCD.

FIG. 4 is a more detailed embodiment of the telecommunications network arrangement and system for determining a voice communication capability. The skilled person is aware of the functions of the depicted components and would acknowledge that there may be more components, functions and network connections in any practical system.

Briefly, FIG. 4 shows a wireless communication device WCD, such as a smart phone, for which the voice communication capability is to be determined.

The GSM branch in FIG. 4 comprises a base station BS connected (possibly via other components such as a base station controller BSC) to a mobile switching centre, MSC. The mobile switching centre MSC is connected to a home location register, HLR, possibly via a visitor location register, VLR, not shown.

The LTE branch in FIG. 4 comprises separated planes for signalling data and user data. The LTE radio interface with the wireless communication device WCD is provided by a set of evolved NodeBs, eNbs. For the signalling plane, communications run over a mobility management entity, MME, connected to a home subscriber system HSS. This plane is used when the wireless communications device issues a network attach request to register in the LTE network. The user plane is provided via an S-gateway and a P-gateway, abbreviated as SGWand PGW, respectively.

The IP multimedia system, IMS, is a standardized framework for delivering IP multimedia services enabling, amongst others, voice communications over packet-switched networks. The IMS architecture is divided into multiple layers for applications, control and transport (not shown) as is generally known to the skilled person. IMS uses the session initiation protocol, SIP, for session control. IMS supports voice-over-IP, VoIP, by utilizing SIP for initiating, maintaining and terminating voice sessions.

The key technical components used by the IMS system Include the home subscriber server HSS (shown in FIG. 4 in the core network) as a main database for subscriber profiles, a call session and control function, CSCF, to manage session control and interaction with other entities and application services, AS, not shown, for telephony services, for example.

The system 10 for determining voice communication capability of the wireless communication device WCD includes a processing system 12 and a database DB. The system 10 is connected to the GSM network and LTE network (via IMS) through in Interconnection Border Control Function, ICBF, component, for example. Processing system 12 may run an application service AS to determine the voice communication capability.

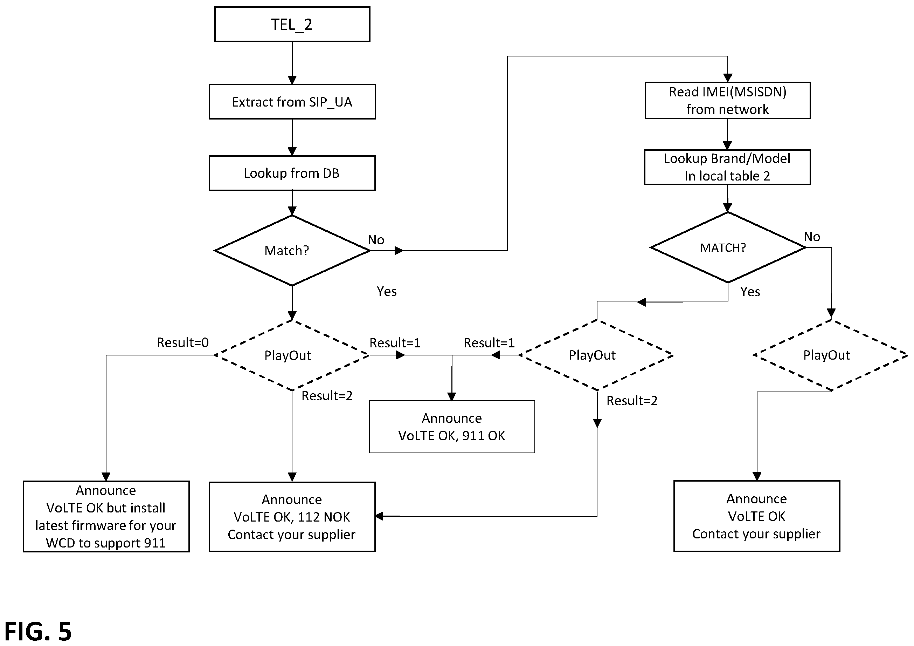

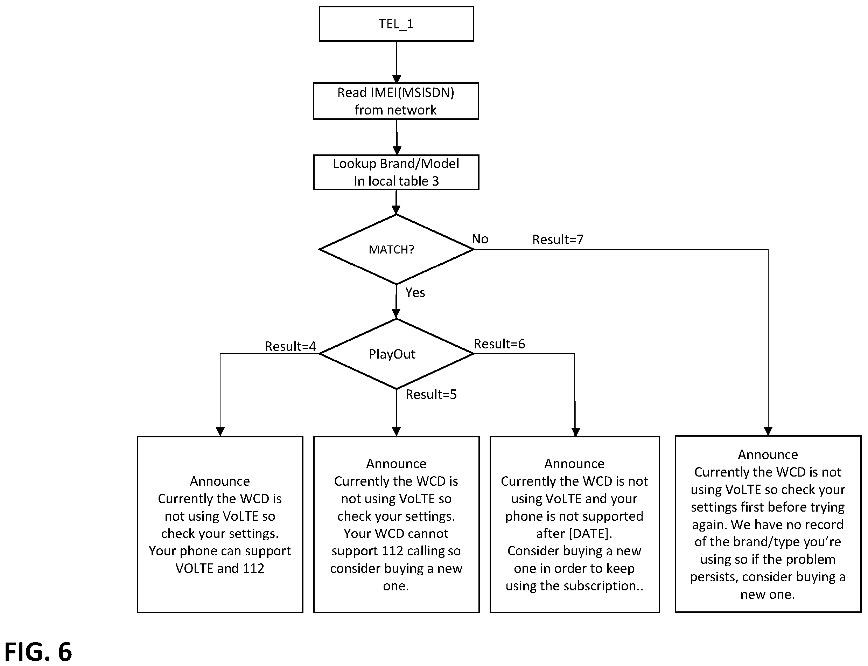

The system 10 is enabled to determine if wireless communication device WCD is only able to establish a voice call via the GSM branch or that the wireless communication device WCD may also establish a voice call via the LTE branch in FIG. 4. Examples to determine the voice communication capability are given in FIGS. 5 and 6.

In one embodiment, processing system 12 includes an interactive voice response system, IVR, enabling customers of wireless communication devices WCD to call to a general number XXXX. The voice response system IVR is further connected to a component to distinguish call flows dependent on the network GSM or LTE that was used to connect to the IVR. For example, a call flow with TEL_1 may be triggered if the wireless communications device WCD connects via the GSM network and a call flow with TEL_2 may be triggered if the wireless communications device WCD connects via the LTE network.

It is noted that the processing system 12 may, alternatively, comprise a non-interactive system that may provide a message or announcement to the customer.

FIG. 5 depicts a diagram if the wireless communications device WCD connects to the LTE network. In one embodiment, this is detected through activation of the call flow for TEL_2 when a call is placed to the general telephone number from the wireless communication device WCD. The system 10 may then extract a software version from SIP_UA signalling information, for example by extracting the brand, model and/or software version from SIP_UA. A lookup in the database DB is then performed to find out the voice communication capability for the wireless communications device WCD. The lookup may result in a variety of match results. Optionally, as shown by the dashed diamond shaped boxes in FIG. 5, the result of the lookup may be played out to the wireless communication device WCD over the voice response system IVR.

If a match is found with result=0, the system 10 determines from the signalling information (e.g. the software version) that the wireless communication device WCD is hardware capable to connect to the LTE network and is also able to connect to a variety of call entities using VoLTE. The system 10 may also find that the software version still needs to be updated in order to connect to other call entities, such as emergency service 911.

If a match is found with result=1, the system 10 determines from the signalling information (e.g. the software version) that the wireless communication device WCD is hardware capable to connect to the LTE network and is also able to connect to a variety of call entities using VoLTE, including emergency services.

If a match is found with result=2, the system 10 has determined from the signalling information (e.g. the software version) that the wireless communication device WCD is hardware capable to connect to the LTE network and is also able to connect to a variety of call entities using VoLTE. The system 10 may also find that some call entities, such as emergency service 911, cannot be called and that no software version is known to resolve that issue. Hence, the system 10 may determine that the wireless communication device WCD is able to establish VoLTE voice communications, but that the supplier of the device should be contacted for the emergency call capabilities.

If a match is not found based on the signalling information enabling derivation of a software version, the system 10 may trigger a backup process to read other signalling information for the wireless communication device WCD, such as the IMEI or TAC code (or the MSISDN) from the LTE network (e.g. from the HSS). This information may be used to determine a brand and model of the wireless communications device WCD from the database. If a match is found using the backup process, the result may be result=1 or result=2. If not, the system 10 may conclude that the hardware of the wireless communication device WCD is suitable for VoLTE (since the device connected via the LTE network), but that no further information is available, so that the supplier should be contacted on software version capabilities, including voice communication capabilities to 911 emergency services.

FIG. 6 depicts a diagram if the wireless communications device WCD connects to the GSM network. In one embodiment, this is detected through activation of the call flow for TEL_1 when a call is placed to the general telephone number XXXX from the wireless communication device WCD.

Since the GSM registration/connection does not allow to determine a software version, if any, for the wireless communication device WCD, the system 10 determines the TAC or IMEI (or MSISDN) from a signalling information from the HLR, for example. This signalling information may be used to query the database DB to find the brand/model of the wireless communication device WCD.

A lookup in the database DB is then performed to find out the voice communication capability for the wireless communications device WCD. The lookup may result in a variety of match results. Optionally, as shown by the dashed diamond shaped box in FIG. 6, the result of the lookup may be played out to the wireless communication device WCD over the voice response system IVR.

If a match is found with result=4, the system 10 determines from the signalling information (e.g. the IMEI/TAC) that the wireless communication device WCD is not using VoLTE but can use VoLTE and can also connect to emergency call entities such as 911. However, setting (e.g. a disablement of VoLTE), firmware and/or LTE-coverage may have prevented the wireless communication device WCD to connect to the LTE network.

If a match is found with result=5, the system 10 determines from the signalling information (e.g. the IMEI/TAC) that the wireless communication device WCD is not using VoLTE but can use VoLTE. However, a setting (e.g. a disablement of VoLTE), firmware and/or LTE-coverage may have prevented the wireless communication device WCD to connect to the LTE network. The system 10 may also find that no software is available for the device to call certain call entities, such as emergency service 911, so that acquiring a new wireless communication device WCD may be advisable.

If a match is found with result=6, the system 10 determines from the signalling information (e.g. the IMEI/TAC) that the wireless communication device WCD is not using VoLTE and also cannot use VoLTE. The announcement may include a data after which the GSM network is disabled, so that acquiring a new wireless communication device WCD may be advisable.

If no match is found, result=7, the system 10 determines from the signalling information (e.g. the IMEI/TAC) that the wireless communication device is not use VoLTE so that settings etc. may need to be checked. Since no match has been found in the database DB, no further advice can be given.

Finally, in order to populate the database DB with further information, the system 10 of FIG. 1 or FIG. 4 may comprise an input to gather call history of various types of wireless communication devices WCD. For example, the system 10 may record various information items (brand, type, model, software version) of wireless communication devices WCD calling emergency services and populate the database with this information in order for future determination of voice communication capabilities of such devices.

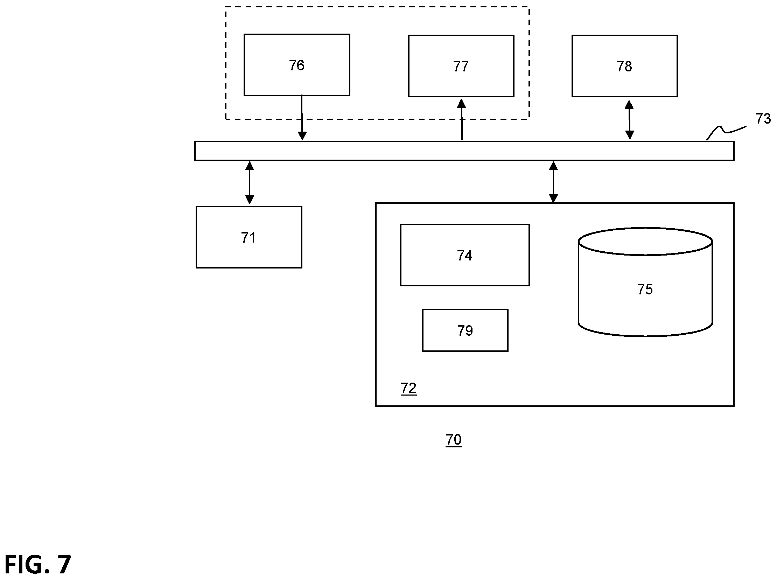

FIG. 7 depicts a block diagram illustrating an exemplary processing system according to a disclosed embodiment, e.g. a (part of a) the system 10 to determine a voice communication capability of a wireless communication device WCD. As shown in FIG. 7, the processing system 70 may include at least one processor 71 coupled to memory elements 72 through a system bus 73. As such, the processing system may store program code within memory elements 72. Further, the processor 71 may execute the program code accessed from the memory elements 72 via a system bus 73. In one aspect, the processing system may be implemented as a computer system that is suitable for storing and/or executing program code. It should be appreciated, however, that the processing system 70 may be implemented in the form of any system including a processor and a memory that is capable of performing the functions described within this specification.

The memory elements 72 may include one or more physical memory devices such as, for example, local memory 74 and one or more bulk storage devices 75. The local memory may refer to random access memory or other non-persistent memory device(s) generally used during actual execution of the program code. A bulk storage device may be implemented as a hard drive or other persistent data storage device. The processing system 70 may also include one or more cache memories (not shown) that provide temporary storage of at least some program code in order to reduce the number of times program code must be retrieved from the bulk storage device 75 during execution.

Input/output (I/O) devices depicted as an input device 76 and an output device 77 optionally can be coupled to the processing system. Examples of input devices may include, but are not limited to, a space access keyboard, a pointing device such as a mouse, or the like. Examples of output devices may include, but are not limited to, a monitor or a display, speakers, or the like. Input and/or output devices may be coupled to the processing system either directly or through intervening I/O controllers.

In an embodiment, the input and the output devices may be implemented as a combined input/output device (illustrated in FIG. 7 with a dashed line surrounding the input device 76 and the output device 77). An example of such a combined device is a touch sensitive display, also sometimes referred to as a "touch screen display" or simply "touch screen" that may be provided with the UE. In such an embodiment, input to the device may be provided by a movement of a physical object, such as e.g. a stylus or a finger of a person, on or near the touch screen display.

A network adapter 78 may also be coupled to the processing system to enable it to become coupled to other systems, computer systems, remote network devices, and/or remote storage devices through intervening private or public networks. The network adapter may comprise a data receiver for receiving data that is transmitted by said systems, devices and/or networks to the processing system 70, and a data transmitter for transmitting data from the processing system 70 to said systems, devices and/or networks. Modems, cable modems, and Ethernet cards are examples of different types of network adapter that may be used with the processing system 70.

As pictured in FIG. 7, the memory elements 72 may store an application 79. In various embodiments, the application 79 may be stored in the local memory 74, the one or more bulk storage devices 75, or apart from the local memory and the bulk storage devices. It should be appreciated that the processing system 70 may further execute an operating system (not shown in FIG. 7) that can facilitate execution of the application 79. The application 79, being implemented in the form of executable program code, can be executed by the processing system 70, e.g., by the processor 71. Responsive to executing the application, the processing system 70 may be configured to perform one or more operations or method steps described herein.

In one aspect of the present invention, one or more components of the base station selection support system and/or user device for use with such a base station selection support system. as disclosed herein may represent processing system 70 as described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 71 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration but is not intended to be exhaustive or limited to the implementations in the form disclosed. Many modifications and variations will be apparent to those of ordinary skill in the art without departing from the scope of the claims. The embodiments were chosen and described in order to best explain the principles and some practical applications of the present invention, and to enable others of ordinary skill in the art to understand the present invention for various embodiments with various modifications as are suited to the particular use contemplated.

## Claims

1. A system for determining at least one voice communication capability of at least one wireless communication device configured to register in and connect to a core network through at least one radio access network using at least one radio access technology, wherein the system comprises:
a signalling information evaluation system configured to determine at least one of first signalling information and second signalling information for the wireless communication device depending on the radio access technology used by the wireless communication device when registering or establishing a voice connection in the core network through the radio access network;
at least one database comprising the at least one voice communication capability associated with at least one of the first signalling information and the second signalling information,
wherein the system is configured to determine the at least one voice communication capability from the at least one database based on at least one of the determined first signalling information and second signalling information.

2. The system according to claim 1, wherein the system comprises:
a radio access technology determination system configured to determine a first radio access technology or a second radio access technology as the radio access technology used by the at least one wireless communication device when registering or establishing the voice connection in the core network through the radio access network;
wherein the signalling information evaluation system is configured to determine at least one of first signalling information and second signalling information for the wireless communication device depending on whether the first radio access technology or the second radio access technology is used when registering or establishing the voice connection in the core network through the radio access network.

3. The system according to claim 1 or 2, wherein the radio access technology used is at least one of the following:
- a first radio access technology comprising ETSI Global System for Mobile communications, GSM, radio access technology (2G) and/or General Packet Radio Service, GPRS;
- a second radio access technology comprising 3GPP Long Term Evolution, LTE, radio access technology (4G).

4. The system according to one or more of the preceding claims, wherein the signalling information evaluation system comprises at least one of:
a device identifier determination system configured to determine a device identifier used by the wireless communication device as first signalling information when registering or connecting through the radio access network at least when a first radio access technology is used by the wireless communication device;
a software version determination system configured to determine a software version used by the wireless communication device as second signalling information, such as SIP UA signalling, when registering or connecting through the radio access network at least when a second radio access technology is used by the wireless communication device;
and wherein the at least one database comprises at least one voice communication capability associated with at least one of the device identifier and the software version,
and wherein the system is configured to determine the at least one voice communication capability from the at least one database based on at least one of the device identifier and the software version.

5. The system according to one or more of the preceding claims, wherein at least one of the first signalling information and second signalling information is associated with the at least one voice communication capability in the database via at least one of a brand indication and model indication of the wireless communication device.

6. The system according to one or more of the preceding claims, wherein the at least one voice communication capability comprises at least one of:
- a capability to establish a voice connection using a second radio access technology through the radio access network, such as Voice-over- LTE (VoLTE);
- a capability to connect to one or more particular telephone numbers, such as one or more emergency telephone numbers using a second radio access technology through the radio access network.

7. The system according to one or more of the preceding claims, wherein the system is further configured to generate a message for the wireless communication device in response to receiving an indication of a registration message or voice call from the wireless communication device, wherein the content of the message is based on the determined voice communication capability.

8. The system according to claim 7, wherein the system is further configured to trigger transmission of the message to the wireless communication device.

9. The system according to one or more of the preceding claims, wherein the system is configured to be accessible from the wireless communication device through the at least one radio access network by a generic telephone number, such as a telephone number of a voice response system.

10. The system according to claim 9, wherein the system provides a first call flow and a second call flow, wherein the first call flow is selected when the first radio access network is determined and the second call flow is selected when the second radio access network is determined.

11. The system according to one or more of the preceding claims, wherein the system is connected to a call entity, such as an emergency call entity, and is configured to populate the database with voice communication capabilities based on voice calls to the call entity.

12. A method for determining at least one voice communication capability of at least one wireless communication device configured to register in and connect to a core network through at least one radio access network using at least one radio access technology, wherein the method comprises the steps of:
determining at least one of first signalling information and second signalling information for the wireless communication device depending on the radio access technology used by the wireless communication device when registering or establishing a voice connection in the core network through the radio access network;
determining the at least one voice communication capability from at least one database, the database comprising the at least one voice communication capability associated with at least one of the first signalling information and the second signalling information, based on at least one of the determined first signalling information and second signalling information.

13. The method according to claim 12, wherein the method further comprises the step of populating the at least one database with voice communication capability information in association with signalling information.

14. The method according to claim 12 or 13, wherein the method further comprises at least one of the steps of:
determining a device identifier used by the wireless communication device as first signalling information when registering or connecting through the radio access network at least when a first radio access technology is used by the wireless communication device;
determining a software version used by the wireless communication device as second signalling information when registering or connecting through the radio access network at least when a second radio access technology is used by the wireless communication device;
wherein the at least one database comprises at least one voice communication capability associated with at least one of the device identifier and the software version,
and wherein the method further comprises the step of determining the at least one voice communication capability from the at least one database based on at least one of the device identifier and the software version.

15. A computer program product comprising one or more software code portions configured to, when run on a system as defined in one or more of the claim 1 to 11, to execute the method according to one or more of the claims 12 to 14.
